# EUROPEAN PATENT APPLICATION

(11) **EP 4 529 987 A1**
(43) Date of publication of application: **02.04.2025**
(21) Application number: 23199815.4
(22) Date of filing: 26.09.2023
(51) Int. Cl.: B05B 13/04

(54) **SURFACE TREATMENT DEVICE FOR CYLINDRICAL STRUCTURES**

(71) Applicant: Nordrep A/S, 9850 Hirtshals (DK)
(72) Inventor: Hansen, Ejgil Bernth, 9850 Hirtshals (DK)
(74) Representative: Nordic Patent Service A/S

(57) **Abstract**

A device (1) for surface treatment of cylindrical structures (2) comprising an elongated frame structure (3) with a pair of fastening means (4) arranged at its ends, a moving platform (5) arranged on the frame structure (3) to be movable between the pair of fastening means (4) and interchangeable treatment means (6) on the moving platform (5) for applying different surface treatments to the surface of the cylindrical structure (2). The fastening means (4) comprise a tensioned flexible strap (42) to be arranged circumferentially around the cylindrical structure (2), pivoted rollers (46) for movably engaging its surface, and rotating means (34) configured to move the device (1) with respect to the flexible strap (42) and around the circumference of the cylindrical structure (2).

## Description

### TECHNICAL FIELD

The present invention relates in general to maintenance of cylindrical structures, and in particular to devices for applying surface treatment to vertical pipes of large diameters, such as boat landing pipes of offshore wind turbines. The invention further relates to systems for maintenance of cylindrical structures.

### BACKGROUND

Offshore marine structures often used for drilling wells and producing hydrocarbons from reservoir sites beneath varying water depths. In addition, wind turbines are also increasing in prominence and popularity as a source of clean energy production, and a large portion of these wind turbines are also getting erected as offshore marine structures.

These offshore marine structures are often supplied by work boats and other floating craft that carry supplies, tools, and personnel to assure a continuous operation.

Depending on the location of these sites, the tidal difference in the water level and the amplitude of waves can vary greatly. To ensure safe landing, dedicated boat landing means must be provided on these offshore structures for accommodating work boats and other floating craft to pull and dock alongside. Such boat landing means should be adjustable to accommodate boats regardless of the tides and the general weather. However, due to the extremely rough conditions which are to be expected, it has been found to be highly impractical to make a boat landing which can be adjusted to a prevailing water level condition, and where a boat can dock in a fixed manner. Instead, boat landing means are often provided with vertical pipes that extend over a certain height to accommodate for tidal movements and are often covered by a thick layer of polymer material designed to engage with frontal surfaces of docking boats while these boats are continuously thrusted against the pipes by their provided engines, instead of a fixed attachment that could easily break from a hit of a larger wave.

Due to the constant powerful friction between the boats and the pipe surface, this coating is eroded over time and needs to be maintained or renewed, which requires spray coating using a two-component system. Before the new layer is applied, the surface of these pipes also need to be sand or hydro blasted to remove the previous eroded coating and clean the surface of other types of contamination.

Presently this job is carried out by workers suspended from a wire. One problem with this solution is that the sand blasting and hydro blasting gives a large recoil (approximately 30 kg), and that both the blasting and the coating needs to be applied from a very specific distance from the treated surface. During sand blasting the nozzles also have to strictly be in touch with the pipe surface with their brushes to ensure that all of the blasting material is sucked back into a container and does not end up in the environment. All these restrictions make the task difficult and dangerous to carry out manually.

It is sometimes also necessary to gain access to an outer surface of a cylindrical structure, such as the monopile of an offshore wind turbine tower. This may, e.g., be in order to clean the tower structure or in order to provide surface treatment to the tower structure, e.g. in the form of paint, coating, abrasive treatment or the like. Previously, such access has been provided by means of floating cranes, or by personnel being suspended from an upper part of the tower structure, using ropes, wires or the like. However, due to adverse weather conditions and distances from the shore, access to these offshore sites does not always allow for such floating cranes being provided, and suspending personnel from the tower structure may potentially be hazardous to the personnel.

Due to the increasing volume of such offshore structures, there is thus a growing need for a safe, reliable, cost-effective and robust solution for applying surface treatment to cylindrical structures that does not require the use of floating machinery or suspended workers.

### SUMMARY

On the above background it is an object of the present invention to provide a device and system for the maintenance of cylindrical structures that overcomes some or all of the disadvantages of the prior art solutions.

According to a first aspect there is provided a device for surface treatment of cylindrical structures comprising an elongated frame structure comprising two distal ends; a pair of fastening means arranged at opposite distal ends of the frame structure for securing the device to a cylindrical structure, at least one of the pair of fastening means being configured to be arranged circumferentially around the cylindrical structure; a moving platform arranged on the frame structure to be movable between the pair of fastening means; and at least one treatment means arranged on the moving platform for applying a surface treatment to a surface of the cylindrical structure.

Such a device enables surface treatment of cylindrical structures of varying diameters by being able to be fastened to these cylindrical structures using a pair of fastening means e.g. flexible belts. The elongated frame and moving platform arranged thereon allows for arranging various treatment means, such as painting, coating, abrasive treatment or the like, at specific distances from the surface of the cylindrical structure to be treated. The moving platform further ensures that once the device is fastened to the cylindrical structure, the remaining maintenance task can be carried out in a remotely operated fashion, without the need for manual intervention.

In a possible implementation form of the first aspect, the frame structure is arranged with respect to the fastening means to provide a substantially constant spacing between the frame structure and the circumference of the cylindrical structure along the length of the frame structure when the device is fastened to the cylindrical structure.

In an embodiment the frame structure is a lattice structure comprising a plurality of parallel struts extending between the pair of fastening means and a plurality of lacing bars extending between the struts.

In an embodiment the struts and lacing bars are all arranged in a first pane, the first pane arranged radially with respect to the central axis of the cylindrical structure when the device is fastened to the cylindrical structure using the pair of fastening means.

In an embodiment the frame structure is arranged so that its longitudinal axis is parallel to a central axis of the cylindrical structure when the device is fastened to the cylindrical structure using the pair of fastening means.

In an embodiment the treatment means are arranged on the moving platform to be directed radially towards the central axis of the cylindrical structure when the device is fastened to the cylindrical structure using the pair of fastening means.

In an embodiment the length of the frame structure substantially corresponds to the length of the cylindrical structure to be treated.

In an embodiment the length of the frame structure ranges between L= 1 to 10 m, for example L = 5 m.

In a possible implementation form of the first aspect, at least one of the pair of fastening means comprise a housing connected to the frame structure; a flexible strap connected to the housing and configured to be arranged around the circumference of the cylindrical structure, and tensioning means configured to apply tension on the strap and secure the housing to the surface of the cylindrical structure.

In an embodiment the flexible strap is a belt arranged through the housing, the tensioning means being configured to shorten or lengthen the belt to adjust to the circumference of the cylindrical structure.

In an embodiment the flexible strap is a cargo lashing belt.

In an embodiment the fastening means comprise multiple flexible straps arranged in parallel at each housing.

In an alternative embodiment the flexible strap is belt with two distal ends to be connected via the tensioning means after being arranged around the circumference of the cylindrical structure.

In a possible implementation form of the first aspect, the fastening means comprise alignment means configured to align with the arc of the cylindrical structure and keep a longitudinal axis of the housing at a radial angle with respect to the central axis of the cylindrical structure when the device is fastened to the cylindrical structure.

In a possible implementation form of the first aspect, the alignment means comprise at least two pivoted engagement means arranged at a distance from each other and being pivotably connected to the housing, the pivoted engagement means comprising rollers for movably engaging the surface of the cylindrical structure.

In a possible implementation form of the first aspect, the housing comprises rotating means configured to move the housing relative to the circumference of the cylindrical structure while keeping a longitudinal axis of the housing at a radial angle with respect to the central axis of the cylindrical structure when the device is fastened to the cylindrical structure.

In a possible implementation form of the first aspect, the rotating means is configured to drive a rotating drum, the rotating drum being arranged to continuously engage with the flexible strap and move the housing with respect to the circumference of the cylindrical structure.

In an embodiment the rotating means comprises a remotely controllable electric motor.

In an embodiment the rotating means is configured to drive a rotating drum via a driving belt.

In an embodiment the tensioning means comprises spring-loaded drums arranged rotatably in the housing to engage with and provide additional tension for the flexible strap and keep the flexible strap engaged with the rotating drum.

In an embodiment the housing is configured to rotate to a limited degree in two opposite directions around the central axis of the cylindrical structure, the limited degree preferably being 60 degrees in both directions, allowing the device to cover a segment of 120 degrees of the circumference of the cylindrical structure.

In an embodiment the housing is configured to rotate fully around the central axis of the cylindrical structure.

In an embodiment only one of the pair of fastening means comprises rotating means, wherein the pair of fastening means are connected via a common drive shaft configured to move both housings of the pair of fastening means in sync around the central axis of the cylindrical structure.

In an embodiment both of the pair of fastening means comprises rotating means, the respective rotating means being configured to move around the central axis of the cylindrical structure in sync.

In a possible implementation form of the first aspect, the moving platform is arranged on the frame structure to be movable between the pair of fastening means using platform driving means configured to move the moving platform along the frame structure in at least two opposite directions; and platform guide means configured for movably fastening the moving platform to the frame structure.

In an embodiment the platform guide means comprise guide rollers arranged around struts of the frame structure extending between the fastening means.

In a possible implementation form of the first aspect, the platform driving means comprises a pulley arranged at each end of the frame structure, a cable arranged movably around the pulleys, and gripping means arranged on the moving platform to secure the moving platform to the cable.

In an embodiment at least one of the pulleys is driven via a remotely controllable electric motor, thereby moving the moving platform along the frame structure by moving the cable around the pulleys.

In possible embodiments the platform driving means comprises, instead of a cable, a wire, a chain, a belt, or any suitable means to be arranged movably around the pulleys.

In an embodiment the frame structure comprises end switches arranged at each end thereof configured for limiting the movement of the moving platform along the frame structure to a predefined extent.

In an embodiment the device comprises a pair of moving platforms arranged on the frame structure, both moving platforms arranged to be movable along the frame structure between the pair of fastening means.

In an embodiment the treatment means arranged on the moving platform are configured for cleaning, abrasive treatment, painting and/or coating of the surface of the cylindrical structure.

In a possible implementation form of the first aspect, the treatment means comprises a sand blasting unit, the sand blasting unit comprising a sand blasting nozzle arranged on the moving platform at a position so that the end of the sand blasting nozzle can reach the surface of the cylindrical structure at any position of the moving platform along the frame structure when the device is fastened to the cylindrical structure; containment means arranged at the end of the sand blasting nozzle for containing the sand blasted from the sand blasting nozzle in a confined space at the surface of the cylindrical structure; and suction means configured for removing the sand blasted from the sand blasting nozzle from the confined space.

In an embodiment the containment means comprise a circular brush arranged around the sand blasting nozzle.

In an embodiment the sand blasting nozzle is configured for operating at 400 mm/min, with a 30 mm spray width, and a 25 mm step over.

In a possible implementation form of the first aspect, the treatment means comprises a hydro blasting unit, the hydro blasting unit comprising a hydro blasting nozzle arranged on the moving platform at a position so that the end of the hydro blasting nozzle can reach the surface of the cylindrical structure at any position of the moving platform along the frame structure when the device is fastened to the cylindrical structure, the hydro blasting nozzle arranged in fluid connection with water supply means arranged for providing sea water at a high pressure.

In a possible implementation form of the first aspect, the treatment means comprises a spray coating unit, the spray coating unit comprising a spray coating nozzle arranged on the moving platform at a position so that the end of the spray coating nozzle is at a predefined distance from the surface of the cylindrical structure at any position of the moving platform along the frame structure when the device is fastened to the cylindrical structure.

In an embodiment the predefined distance is D=600mm.

In an embodiment the spray coating nozzle is configured for spraying a two-component polyurea coating material at 2 mm layer thickness to a total of 30 mm thickness, at a speed of 1.200 mm/min, with a spray cone allowing a step over of 40 degrees.

In a possible implementation form of the first aspect, the moving platform comprises an interface configured for attaching different interchangeable treatment means at different positions on the moving platform.

In an embodiment the treatment means comprises at least two distinct treatment units, such as a sand blasting unit, a hydro blasting unit, and a spray coating unit, each treatment unit configured for a different treatment purpose of the cylindrical structure and arranged to be located at a different position on the moving platform to be able to apply surface treatment on the surface of the cylindrical structure from different distances when the device is fastened to the cylindrical structure.

In an embodiment the treatment means are arranged on the moving platform to be movable in directions perpendicular to the movement of the moving platform, so that they can assume an adjustable distance D from the surface of the cylindrical structure at any position of the moving platform along the frame structure.

According to a second aspect there is provided a system for surface treatment of cylindrical structures, the system comprising a device according to any one of the possible implementation forms of the first aspect configured to be arranged on the cylindrical structure using a pair of fastening means and comprising treatment means arranged on a moving platform; a work platform arranged in operative connection with the treatment means; and a remote control unit configured for wired or wireless control of at least one of the fastening means, the moving platform, and the treatment means from a remote position.

In an embodiment the work platform is arranged on the cylindrical structure, such as on a boat landing pipe.

In an embodiment the work platform is arranged on a main structure supporting the cylindrical structure, such as on a monopile of an offshore wind turbine.

In an embodiment the work platform is arranged on a workboat configured to remain in a position in the vicinity of the cylindrical structure.

In an embodiment the work platform comprises electric power means for providing electric power for the electric motors mentioned above, and pressurizing means for providing working pressure for the treatment means.

In an embodiment the system further comprises a sand supply arranged on the work platform in operative connection with the sand blasting nozzle arranged on the moving platform, and a sand collecting system for collecting sand blasted from of the sand blasting nozzle through the suction means arranged on the moving platform.

In an embodiment the system further comprises a coating supply arranged on the work platform in fluid connection with the spray coating nozzle arranged on the moving platform.

In an embodiment the system further comprises water supply means arranged on the work platform in fluid connection with the hydro blasting nozzle arranged on the moving platform for providing sea water at a high pressure.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 is an elevated side view of an offshore monopile with a pair of cylindrical structures to be treated using a device according to an example of the disclosure,
Fig. 2 is an elevated front view showing a pair of surface treatment devices according to an example of the disclosure fastened to respective cylindrical structures to be treated,
Figs. 3A and 3A are elevated side views of cylindrical structures with surface treatment devices fastened thereto, applying different surface treatments according to examples of the disclosure,
Fig. 4 is an elevated isometric view of the surface treatment device arranged to be moved around the cylindrical structure according to an example of the disclosure,
Fig. 5 is a side view showing fastening means and the moving platform of a surface treatment device according to an example of the disclosure,
Fig. 6 is a top view of the surface treatment device arranged to be moved around the cylindrical structure according to an example of the disclosure,
Figs. 7A and 7B are zoomed in elevated side views showing the surface treatment device applying different surface treatments to respective cylindrical structures according to examples of the disclosure,
Fig. 8 illustrates the installation of surface treatment devices onto a pair of cylindrical structures according to an example of the disclosure, and
Fig. 9 illustrates the remote operation of a system of surface treatment devices from a floating working platform according to an example of the disclosure.

### DETAILED DESCRIPTION

The following detailed description relates to specific, but non-limiting, exemplary embodiments of the invention.

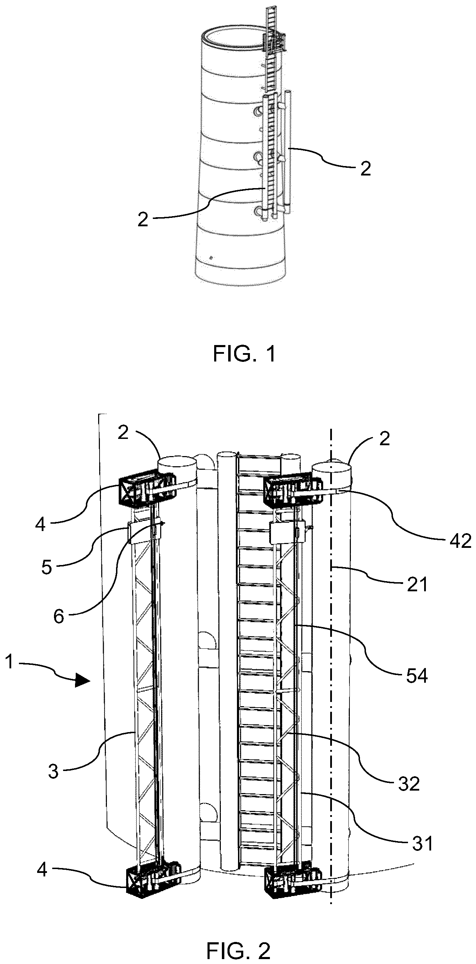

Referring to Fig. 1 there is shown an exemplary offshore structure, such as a wind turbine monopile, with a pair of cylindrical structures 2 to be treated. In the illustrated examples these cylindrical structures 2 are boat landing pipes with specific coating designed to withstand continuous large force hits and friction from work boats and other floating structures, which need periodic maintenance of this coating.

Fig. 2 shows a closer view of the pair of boat landing pipes 2, each of the boat landing pipes 2 now having fastened thereon a surface treatment device 1 according to the disclosure.

Each of these surface treatment devices 1 comprises an elongated frame structure 3 with a pair of fastening means 4 arranged at their opposite distal ends for securing the device 1 to the boat landing pipes. The fastening means 4 in the illustrated examples comprise a flexible strap 42 arranged around the circumference of each boat landing pipe 2.

The frame structure 3 is arranged on the provide a substantially constant spacing S between the frame structure 3 and the circumferential surface of the boat landing pipes 2 along the entire length of the frame structure 3. This can be achieved, as illustrated, by arranging the frame structure 3 as a lattice structure comprising a plurality of parallel struts 31 extending between the pair of fastening means 4 and a plurality of lacing bars 32 extending between the struts 31. The struts 31 and lacing bars 32 are in the illustrated embodiment all arranged in a first pane that is lined up radially with respect to the central axis 21 of the cylindrical structure 2 when the device is fastened thereon. However other lattice structures extending in all 3 dimensions are also within the scope of the disclosure.

A moving platform 5 is further arranged on the frame structure 3 to be movable between the pair of fastening means 4, in this illustrated case vertically up and down in parallel with the boat landing pipes 2 using a movable cable 54 that the moving platform 5 is fastened to. For applying surface treatment to the surface of the boat landing pipes 2, treatment means 6 arranged on the moving platform 5, as will be described below in more detail.

In the following illustrated embodiments, structures and features that are the same or similar to corresponding structures and features previously described or shown herein are denoted by the same reference numeral as previously used for simplicity.

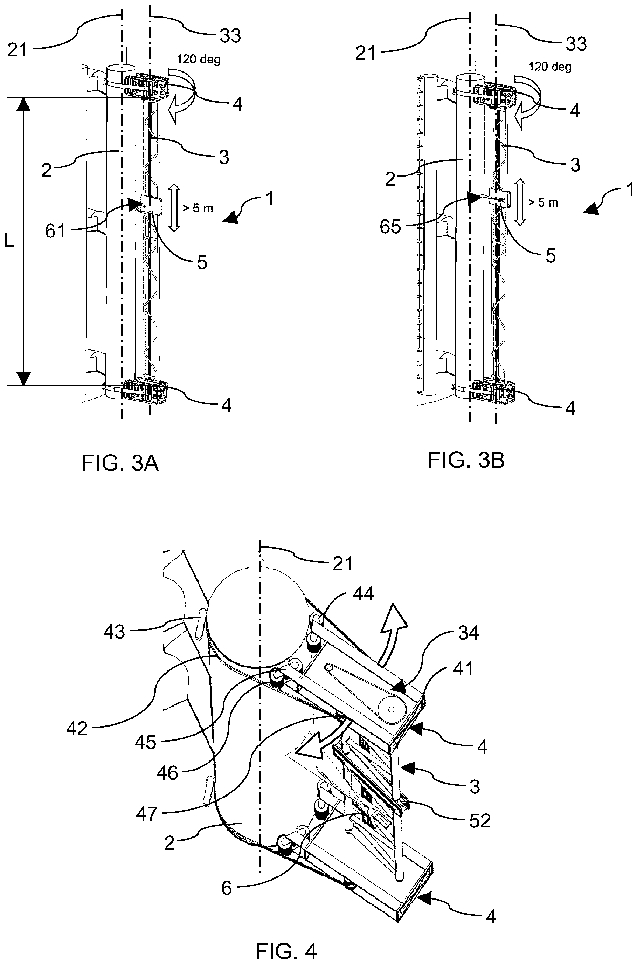

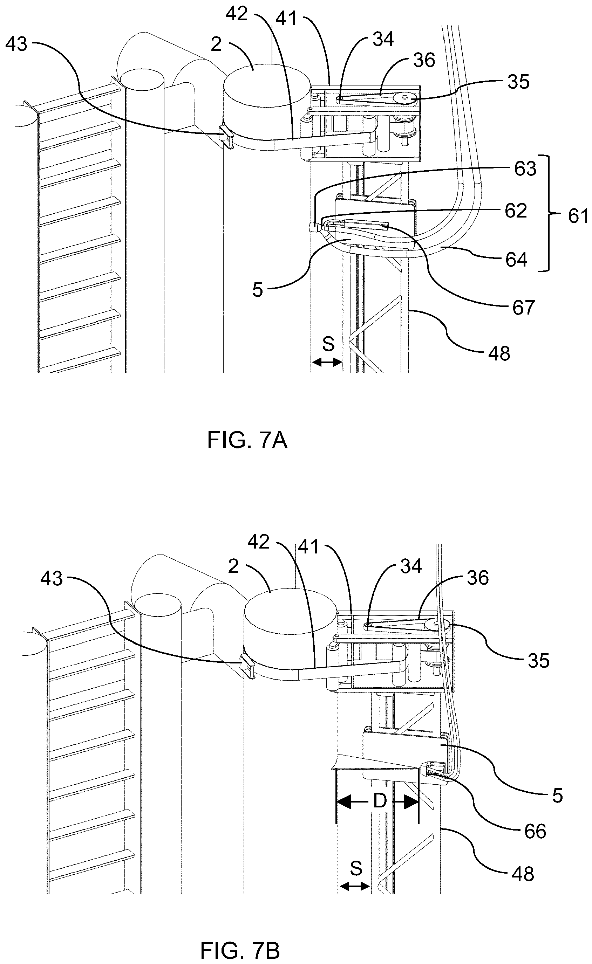

Figs. 3A and 3B illustrate two different treatment phases of the same boat landing pipe 2 using a single surface treatment device 1. As shown in both figures, the frame structure 3 is arranged so that its longitudinal axis 33 is parallel to a central axis 21 of the boat landing pipe 2 when the device is fastened to the boat landing pipe 2 using the pair of fastening means 4, and the treatment means 6 in each case are arranged on the moving platform 5 to be directed radially towards the central axis 21. This way treatment is always applied to the treated surface from a desired distance D (see Fig. 7B for more detail) no matter how the treatment means 6 are rotated with respect to the central axis 21, together with the frame structure 3 and the moving platform 5, as illustrated. This rotation can be arranged via rotating means 34 (see Fig. 4 for more detail) configured to move the housing 41 relative to the circumference of the boat landing pipe 2 while keeping a longitudinal axis of the housing 41 at a radial angle with respect to the central axis 21 of the boat landing pipe 2. In some embodiments the housing 41 is configured to rotate to a limited degree in two opposite directions around the central axis 21 of the boat landing pipe 2, such as 60 degrees in both directions, allowing the device to cover a segment of 120 degrees of the circumference of the boat landing pipe 2, which is usually sufficient to cover the region where coating is applied on boat landing pipes 2. However, the device 1 is not limited in this sense and in other embodiments the housing 41 can be configured to rotate fully around the central axis 21 of the boat landing pipe 2.

The length L of the frame structure 3 can vary depending on the circumstances, e.g. the length of the cylindrical structure 2 to be treated. In the illustrated embodiments the length L of the frame structure 3 substantially corresponds to the length of the boat landing pipe 2 to be treated. In some other embodiments the length L of the frame structure 3 ranges between L= 1 to 10 m, for example it is L = 5 m.

Fig. 3A illustrates an initial cleaning step, wherein the treatment means 6 is a sand blasting unit 61 arranged on the moving platform 5 and configured for cleaning the treated surface of the boat landing pipe 2 by applying a jet of sand driven by compressed air or steam, before any coating is applied. This is explained in more detail with respect to Fig. 7A. Instead of sand blasting, hydro blasting can also be used for the same purpose.

Fig. 3B illustrates a subsequent coating step, wherein the treatment means 6 is a spray coating unit 65 arranged on the moving platform 5 for spraying a coating material on the treated surface of the boat landing pipe 2. This is explained in more detail with respect to Fig. 7B.

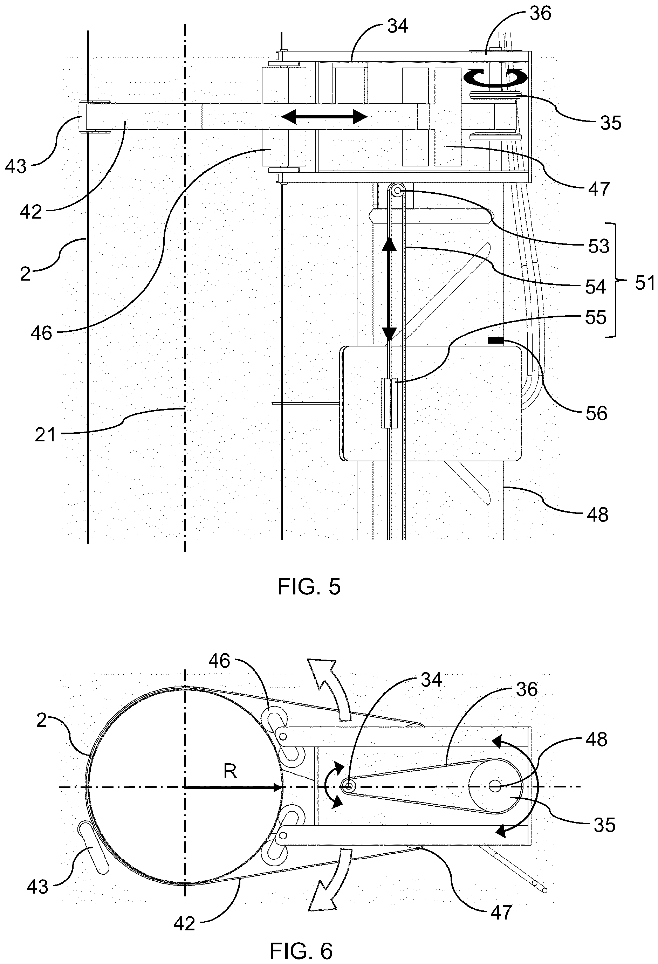

Figs. 4 and 6 show in more detail how the device 1 can apply the different treatment means 2 to the surface of the boat landing pipe 2. As shown in these illustrated embodiments, the fastening means 4 comprise a housing 41 part connected to the frame structure 3 and a flexible strap 42, such as a cargo lashing belt, driven through the housing 41 and arranged around the circumference of the boat landing pipe 2. Tensioning means 43 are further provided on the strap 42 to apply necessary tension by shortening the belt to adjust to the circumference of the boat landing pipe 2 and thus secure the housing 41 on each side of the device 1 to the surface of the boat landing pipe 2. Although the illustrated example only shows one strap 42 for each housing 41, depending on the length L of the frame structure, the load to carry, or other factors, there may be multiple flexible straps 42 arranged in parallel at each housing 41.

As further shown, for engaging with the surface of the boat landing pipe 2, alignment means 44 are provided between on the housing 41 to align with the arc of the boat landing pipe 2 and keep a longitudinal axis of the housing 41 at a radial angle with respect to the central axis 21 of the boat landing pipe 2. The alignment means 44 in the illustrated example comprise two pivoted engagement means 45 arranged at a distance from each other and being pivotably connected to the housing 41. Each of these pivoted engagement means 45 comprise rollers 46 for movably engaging the surface of the boat landing pipe 2, which further enables the device 1 to be rotated around the boat landing pipe 2.

As shown in Fig. 6, for the rotation rotating means 34, such as a remotely controllable electric motor, is provided in the housing 41 to move the housing 41 relative to the circumference of the boat landing pipe 2 while still keeping a longitudinal axis of the housing 41 at a radial angle with respect to the central axis 21 of the boat landing pipe 2. The rotating means 34 drives a rotating drum 35 via a driving belt 36, while the rotating drum 35 is continuously in engagement with the flexible strap 42 and moves the housing 41 with respect to the circumference of the boat landing pipe 2, as illustrated by the arrows, in either direction based on the rotating direction of the rotating drum 35. Spring-loaded drums 47 may be further arranged in the housing, as illustrated in Fig. 4, to engage with and provide additional tension for the flexible strap 42 and keep the flexible strap 42 engaged with the rotating drum 35.

It is possible that only one of the fastening means 4 comprises rotating means 34 for rotating the device 1. In such cases the pair of fastening means 4 on two ends of the frame structure 3 are connected via a common drive shaft 48 configured to move both housings 41 in sync around the central axis 21 of the boat landing pipe 2. In other possible embodiments both of the pair of fastening means 4 comprises rotating means 34, the respective rotating means 34 being configured to move around the central axis 21 of the boat landing pipe 2 in sync.

Fig. 5 shows in more detail how the moving platform 5 is arranged on the frame structure 3 to be movable between the pair of fastening means 4. In particular, on the device 1 platform driving means 51 are provided to move the moving platform 5 along the frame structure 3 in at least two opposite directions as indicated by the arrows. This bi-directional movement is further enabled by platform guide means 52 (shown in Fig. 4) that are arranged on the moving platform 5 for movably fastening the moving platform 5 to the frame structure 3. As illustrated in Fig. 4, these platform guide means 52 may be arranged in the form of guide rollers arranged around struts 31 of the frame structure 3.

As further shown in Fig. 5, the platform driving means 51 comprises a pulley 53 arranged at each end of the frame structure 3 at the housing 41 of the fastening means 4, and a cable 54 arranged movably around the pulleys 53. Instead of a cable 54 other suitable means can be used that fall withing the scope of the disclosure, such as a wire, a chain, a belt, or any suitable means to be arranged movably around the pulleys 53 and hold the moving platform 5.

The moving platform 5 is secure to the cable 54 using gripping means 55. At least one of the pulleys 53 can be driven via a remotely controllable electric motor, thereby moving the moving platform 5 along the frame structure 3, i.e. by moving the cable 54 around the pulleys 53.

To limit the extend of movement of the moving platform 5 along the frame structure 3, such as to provide sufficient clearance between the moving platform 5 and the housing 41 of the fastening means 4 on each end, end switches 56 can be arranged at each end of the frame structure 3. Once the moving platform 5 comes in a defined vicinity or close contact with these end switches 56, the movement of the cable 54 and thus movement of the moving platform 5 is terminated.

The combined freedoms of movement as illustrated in Figs. 5 and 6, i.e. the rotating movement around the central axis 21 of the boat landing pipe 2 and the vertical movements enabled by the platform driving means 51 allows the moving platform 5 and the various treatment means 6 arranged thereon to cover the entire surface of the boat landing pipe 2.

Although the illustrated embodiments only show one moving platform 5 arranged on the frame structure 3, the device 1 is not limited in this sense either. In possible embodiments the device 1 may comprise a pair or more moving platforms 5 arranged on the frame structure 3, the moving platforms 5 arranged to be movable along the frame structure 3 between the pair of fastening means 4.

Figs. 7A and 7B illustrate various treatments applied by the device 1, such as cleaning, abrasive treatment, painting and/or coating of the surface of the boat landing pipe 2.

In particular, Fig. 7A illustrates cleaning and abrasive treatment by sand blasting, wherein the treatment means 6 as described before comprises a sand blasting unit 61. This sand blasting unit 61 comprises a sand blasting nozzle 62 arranged on the moving platform 5 at a position so that the end of the sand blasting nozzle 62 can reach the surface of the boat landing pipe 2 at any position of the moving platform 5 along the frame structure 3 when the device is fastened to the boat landing pipe 2. This is further enabled by the fix distance S that is provided by the frame structure 3 being arranged parallel to the boat landing pipe 2 central axis 21. In an exemplary embodiment the sand blasting nozzle 62 is configured for operating at 400 mm/min, with a 30 mm spray width, and a 25 mm step over.

At the end of the sand blasting nozzle 62 containment means 63 are arranged for containing the sand blasted from the sand blasting nozzle 62 in a confined space at the surface of the boat landing pipe 2. Usually this is achieved by providing a circular brush around the sand blasting nozzle 62. Finally, suction means 64 are also provided for removing the sand blasted from the sand blasting nozzle 62 from the confined space.

Alternatively to the illustrated example in Fig. 7A, instead of a sand blasting unit 61, the treatment means 6 may comprise a hydro blasting unit with a hydro blasting nozzle arranged on the moving platform 5 at a position similar as described before, so that the end of the hydro blasting nozzle can reach the surface of the boat landing pipe 2 at any position of the moving platform 5 along the frame structure 3 when the device is fastened to the boat landing pipe 2. The hydro blasting nozzle arranged in fluid connection with water supply means arranged for providing sea water at a high pressure.

Fig. 7B illustrates a subsequent step of spray coating, wherein the treatment means 6 comprises a spray coating unit 65 with a spray coating nozzle 66 arranged on the moving platform 5 at a position so that the end of the spray coating nozzle 66 is at a predefined distance D from the surface of the boat landing pipe 2 at any position of the moving platform 5 along the frame structure 3 when the device is fastened to the boat landing pipe 2. As a non-limiting example, this predefined distance can be D=600mm.

The spray coating nozzle 66 may be configured for spraying a two-component polyurea coating material. In a non-limiting example, the coating material is applied at 2 mm layer thickness to a total of 30 mm thickness, at a speed of 1.200 mm/min, with a spray cone allowing a step over of 40 degrees.

While the different types of treatment means 6 may be arranged fixedly on the moving platform 5, in an embodiment illustrated in Fig. 7A, the treatment means 6 are interchangeable on the same moving platform 5. This is enabled by an interface 67 configured for attaching different interchangeable treatment means 6 at different positions on the moving platform 5.

In a further possible embodiment (not shown) the treatment means 6 comprises at least two distinct treatment units, such as a sand blasting unit 61, a hydro blasting unit, and a spray coating unit 65, each treatment unit configured for a different treatment purpose of the boat landing pipe 2 and arranged at a different position on the moving platform 5 to be able to apply surface treatment on the surface of the boat landing pipe 2 from different distances when the device is fastened to the boat landing pipe 2.

In a further possible embodiment, the treatment means 6 are arranged on the moving platform 5 to be movable in directions perpendicular to the movement of the moving platform 5, so that they can assume an adjustable distance D from the surface of the boat landing pipe 2 at any position of the moving platform 5 along the frame structure 3.

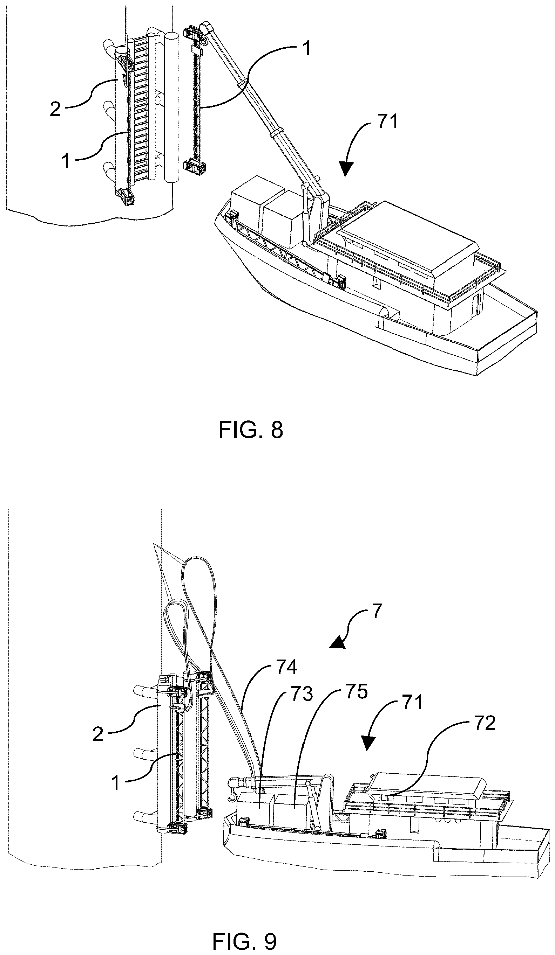

Fig. 8 illustrates the installation of a pair surface treatment devices 1 onto a pair of cylindrical structures 2 according to the disclosure. The surface treatment devices 1 are delivered in the place of treatment by a work vessel 71 which is equipped with a crane to lift the devices 1 onto the cylindrical structures 2. Once lifted thereon, the devices 1 are fastened to the cylindrical structures 2 by looping the straps 42 around their circumference and tensioning the straps 42 by tensioning means 43, as described before and shown in Figs. 4-6 in detail. After fastening each device 1 a respective cylindrical structure 2 the treatment process can begin, as shown in Fig. 9.

Fig. 9 illustrates the remote operation of a system 7 of surface treatment devices 1 from a floating working platform 71 according to the disclosure. The system 7 comprises one or more surface treatment device 1 as described throughout Figs. 2 to 7, each device 1 arranged on a boat landing pipe 2 using a pair of fastening means 4, each device 1 comprising treatment means 6 as described before in relation with Fig. 7A and 7B, arranged on a moving platform 5.

The work platform 71 is arranged in operative connection with each device 1. The work platform 71 can be arranged on the boat landing pipe 2, on a main structure supporting the boat landing pipe 2 such as a wind turbine monopile, or as illustrated, on a workboat configured to remain in a position in the vicinity of the boat landing pipe 2. The work platform 71 can support electric power means for providing electric power for the electric motors mentioned above, and pressurizing means for providing working pressure for the treatment means 6 as needed.

A remote control unit 72 is further provided and configured for wired or wireless control of at least one of the fastening means 4, the moving platform 5, and/or the treatment means 6 from a remote position.

The nature of the operative connection between the work platform 71 and the device 1 depends on the applied treatment. For sand blasting treatment, a sand supply 73 is arranged on the work platform 71 in operative connection with the sand blasting nozzle 62 arranged on the moving platform 5, and a sand collecting system 74 for collecting sand blasted from of the sand blasting nozzle 62 through the suction means 64 arranged on the moving platform 5. For hydro blasting treatment, water supply means arranged on the work platform 71 in fluid connection with the hydro blasting nozzle arranged on the moving platform 5 for providing sea water at a high pressure. For coating treatment, a coating supply 75 arranged on the work platform 71 in fluid connection with the spray coating nozzle 66 arranged on the moving platform 5.

In the present specification, the term "comprising" as used in the claims does not exclude other elements or steps. The term "a" or "an" as used in the claims does not exclude a plurality.

Although the present invention has been described in detail for purpose of illustration, it is understood that such detail is solely for that purpose, and variations can be made therein by those skilled in the art without departing from the scope of the invention.

## Claims

1. A device (1) for surface treatment of cylindrical structures comprising:
an elongated frame structure (3) comprising two distal ends;
a pair of fastening means (4) arranged at opposite distal ends of the frame structure (3) for securing the device (1) to a cylindrical structure (2),
at least one of the pair of fastening means (4) being configured to be arranged circumferentially around the cylindrical structure (2);
a moving platform (5) arranged on the frame structure (3) to be movable between the pair of fastening means (4); and
at least one treatment means (6) arranged on the moving platform (5) for applying a surface treatment to a surface of the cylindrical structure (2).

2. A device according to claim 1, wherein the frame structure (3) is arranged with respect to the fastening means (4) to provide a substantially constant spacing (S) between the frame structure (3) and the circumference of the cylindrical structure (2) along the length of the frame structure (3) when the device is fastened to the cylindrical structure (2).

3. A device according to any one of claims 1 or 2, wherein at least one of the pair of fastening means (4) comprise:
a housing (41) connected to the frame structure (3);
a flexible strap (42) connected to the housing (41) and configured to be arranged around the circumference of the cylindrical structure (2), and
tensioning means (43) configured to apply tension on the strap (42) and secure the housing (41) to the surface of the cylindrical structure (2).

4. A device according to any one of claims 1 to 3, wherein the fastening means (4) comprise alignment means (44) configured to align with the arc of the cylindrical structure (2) and keep a longitudinal axis of the housing (41) at a radial angle with respect to the central axis (21) of the cylindrical structure (2) when the device is fastened to the cylindrical structure (2).

5. A device according to claim 4, wherein the alignment means (44) comprise at least two pivoted engagement means (45) arranged at a distance from each other and being pivotably connected to the housing (41), the pivoted engagement means (45) comprising rollers (46) for movably engaging the surface of the cylindrical structure (2).

6. A device according to any one of claims 1 to 5, wherein the housing (41) comprises rotating means (34) configured to move the housing (41) relative to the circumference of the cylindrical structure (2) while keeping a longitudinal axis of the housing (41) at a radial angle with respect to the central axis (21) of the cylindrical structure (2) when the device is fastened to the cylindrical structure (2).

7. A device according to claim 6, wherein the rotating means (34) is configured to drive a rotating drum (35), the rotating drum (35) being arranged to continuously engage with the flexible strap (42) and move the housing (41) with respect to the circumference of the cylindrical structure (2).

8. A device according to any one of claims 1 to 7, wherein the moving platform (5) is arranged on the frame structure (3) to be movable between the pair of fastening means (4) using
platform driving means (51) configured to move the moving platform (5) along the frame structure (3) in at least two opposite directions; and
platform guide means (52) configured for movably fastening the moving platform (5) to the frame structure (3).

9. A device according to claim 8, wherein the platform driving means (51) comprises a pulley (53) arranged at each end of the frame structure (3), a cable (54) arranged movably around the pulleys (53), and gripping means (55) arranged on the moving platform (5) to secure the moving platform (5) to the cable (54).

10. A device according to any one of claims 1 to 9, wherein the treatment means (6) comprises a sand blasting unit (61), the sand blasting unit (61) comprising:
a sand blasting nozzle (62) arranged on the moving platform (5) at a position so that the end of the sand blasting nozzle (62) can reach the surface of the cylindrical structure (2) at any position of the moving platform (5) along the frame structure (3) when the device is fastened to the cylindrical structure (2);
containment means (63) arranged at the end of the sand blasting nozzle (62) for containing the sand blasted from the sand blasting nozzle (62) in a confined space at the surface of the cylindrical structure (2); and
suction means (64) configured for removing the sand blasted from the sand blasting nozzle (62) from the confined space.

11. A device according to any one of claims 1 to 10, wherein the treatment means (6) comprises a hydro blasting unit,
the hydro blasting unit comprising a hydro blasting nozzle arranged on the moving platform (5) at a position so that the end of the hydro blasting nozzle can reach the surface of the cylindrical structure (2) at any position of the moving platform (5) along the frame structure (3) when the device is fastened to the cylindrical structure (2),
the hydro blasting nozzle arranged in fluid connection with water supply means arranged for providing sea water at a high pressure.

12. A device according to any one of claims 1 to 11, wherein the treatment means (6) comprises a spray coating unit (65),
the spray coating unit (65) comprising a spray coating nozzle (66) arranged on the moving platform (5) at a position so that the end of the spray coating nozzle (66) is at a predefined distance (D) from the surface of the cylindrical structure (2) at any position of the moving platform (5) along the frame structure (3) when the device is fastened to the cylindrical structure (2).

13. A device according to any one of claims 1 to 12, wherein the moving platform (5) comprises an interface (67) configured for attaching different interchangeable treatment means (6) at different positions on the moving platform (5).

14. A system (7) for surface treatment of cylindrical structures, the system (7) comprising:
a device (1) according to any one of claims 1 to 13 configured to be arranged on the cylindrical structure (2) using a pair of fastening means (4) and comprising treatment means (6) arranged on a moving platform (5);
a work platform (71) arranged in operative connection with the device (1); and
a remote control unit (72) configured for wired or wireless control of at least one of the fastening means (4), the moving platform (5), and the treatment means (6) of the device (1) from a remote position.
